# EUROPEAN PATENT APPLICATION

(11) **EP 1 762 596 A1**
(43) Date of publication of application: **14.03.2007**
(21) Application number: 06018177.3
(22) Date of filing: 31.08.2006
(51) Int. Cl.: C09D 5/04, C09D 5/03

(54) **Process for the preparation of colloidal or gel paints**

(30) Priority: 09.09.2005 IT mi20051668
(71) Applicant: Italfinish S.p.A., 24050 Grassobbio BG (IT)
(72) Inventor: Pozzoli, Silvio A., 24050 Grassobbio (BG) (IT); Strazzi, Enzo, 24050 Grassobbio (BG) (IT); Terzi, Alessandro, 24050 Grassobbio (BG) (IT)
(74) Representative: Trupiano, Federica

(57) **Abstract**

Process for the preparation of a paint product in the form of a colloid, in particular in gel form, which comprises a step for preparation of the "vehicle" or "support" by mixing at least one dispersion medium or base and at least one disperse phase, and a step for mixing said "vehicle" or "support" with at least one paint, where said dispersion medium or base is for example selected from among natural silicates such as clays, or from celluloses or polysaccharides variously substituted if necessary, while said disperse phase is water. Said paint suitable for being mixed with said "vehicle" or "support" is in solid form, in particular powder. The present invention also concerns paint products in gel form and their use, in particular for the treatment and/or finish of surfaces made of metal, glass, ceramic, plastic or other materials resistant to the baking temperature of the paint.

## Description

### OBJECT OF THE INVENTION

The present invention concerns a process for the preparation of paints in the form of colloids, in particular gel, gel paints prepared as above, and their use in particular for the treatment and/or finishing of surfaces made of metal, glass, ceramic, plastic or other materials which are resistant to the baking temperature of the paint.

### STATE OF THE ART

In general the paint product commonly used for painting metals can be:
a) liquid paint (liquid product)
b) powder paint (solid product)

As regards liquid paints, it is known that they are based on organic solvents/organic diluents(which end their function once applied) and water if necessary. Generally speaking, liquid paints are characterised by a dry content of up to 50%, while the balance consists of organic solvents and diluents. The use of organic solvents/diluents certainly represents a problem and the environmental implications resulting from their use are steering the paint sector towards products that are less contaminating and easier to dispose of.

Alternatively, powder paints are known, which do not contain any solvent and which have a dry content of 100%. These kind of paints also have some drawbacks, however, which severely limit large-scale use. Powder paints are advantageously applied when the minimum thickness of the paint to be applied is roughly equal to the mean dimension of the powder particles making up the paint, for example approximately 30-40 microns. It therefore follows that, in order to obtain layers of paint with thickness of 10-20 microns, for example, powder paint cannot be used. In fact, the minimum dimension of the particles of powder paint that can be advantageously used for this type of painting cannot be reduced beyond a certain limit, due to the fact that very fine powders have a high level of flammability and also tend to incorporate considerable quantities of contaminants due to the required simultaneous use of large volumes of air for their application. It is therefore fairly complicated, and consequently not economically viable, to excessively reduce the dimension of the particles constituting the powder paint.

To overcome the above problems, dispersions of fine powder in water, called slurry, have been used as an alternative. These slurries, which can be advantageously used for particular applications, do not contain significant quantities of organic solvents, but have a maximum powder content of approximately 40% and the powder particles must have maximum dimensions of 10 microns.

From the above, it is evident that the paint products currently available, in particular for the treatment and/or finish of metal surfaces, have numerous application limits and it is consequently necessary to develop a paint product with a dry content as high as possible and with a variable dimension of the powder particles constituting the dry part of the paint product to permit the formation of layers of paint in different thicknesses according to specific requirements, with water-based remaining part, to avoid the use of organic solvents/diluents characterised by a critical environmental impact.

### OBJECTS OF THE INVENTION

Object of the present invention is to provide a process for the preparation of paints, in particular for the treatment and/or finish of surfaces made of metal, glass, ceramic, plastic or other materials resistant to the baking temperature of the paint, which gives a product with a high dry content.

A further object of the present invention is to provide a process for the preparation of paints, in particular for the treatment and/or finish of surfaces made of metal, glass, ceramic, plastic or other materials, which gives a product in which the dimension of the component particles can vary according to the thickness of the layer of paint to be applied.

A further object of the present invention is to provide a process for the preparation of paints, in particular for the treatment and/or finish of surfaces made of metal, glass, ceramic, plastic or other materials, which gives a product almost or completely free from organic solvents/diluents.

A further object of the invention is to provide a paint product, in particular for the treatment and/or finish of surfaces made of metal, glass, ceramic, plastic or other materials resistant to the baking temperature of the paint, which is characterised by a high dry content, a variable dimension of the powder particles that make up the dry part, and by a water-based balance if necessary.

### DESCRIPTION

These and further objects and related advantages, which will be better clarified in the following description, are achieved by a process for the preparation of a paint product in the form of a colloid, in particular in the form of a gel, which comprises a step for the preparation of a "vehicle" or "support" by mixing of at least one dispersion medium or base and at least one disperse phase, and a step of mixing said "vehicle" or "support" with at least one paint.

More specifically, said dispersion medium or base is chosen, for example, from among natural silicates such as clay, or from celluloses or polysaccharides variously substituted if necessary, while said disperse phase is water. In this case, said "vehicle" or "support", obtained by mixing a solid dispersion medium and a liquid disperse phase is in the form of an aqueous gel.

Always according to the invention, said paint suitable to be mixed with said "vehicle" or "support" is in solid form, in particular powder.

In general terms, a colloid is a mixture in which a substance is split into minute particles and dispersed completely in a second substance. The substances present have larger dimensions than those usually present in a solution, but are still too small to be seen under the microscope. The colloidal particles can have a dimension of between 10⁻⁹ and 10⁻⁶ m for example. The mixture can be called colloidal solution, colloidal mixture or colloidal dispersion. The colloidal systems can be considered any combination of the three states of material: solid, liquid and gaseous.

A colloidal system is not a real solution and neither it is a suspension because it does not sediment over time. Colloids have larger dimensions than the common inorganic molecules and remain suspended indefinitely. A colloidal system can be reversible or irreversible.

Colloids are generally classified according to the original state of the components, as shown in table 1.

| **Dispersion medium** | **Disperse phase** | **Name** |
|---|---|---|
| Solid | Solid | Solid sol |
| **Solid** | **Liquid** | **Gel** |
| Solid | Gas | Solid foam |
| Liquid | Solid | Sol |
| Liquid | Liquid | Emulsion |
| Liquid | Gas | Foam |
| Gas | Solid | Solid aerosol |
| Gas | Liquid | Aerosol |

Dispersion medium (or external phase) indicates the component in the greatest quantity in the colloid, while disperse phase (or internal phase) indicates the component in the smallest quantity.

The colloidal particles are generally aggregates of numerous atoms or molecules that pass through the majority of filter paper, but can be easily detected by refraction of light, sedimentation and osmosis. One of the characteristics of the colloids is absorption, as the finely divided colloidal particles have a large exposed surface.

The chemical and physical properties of inorganic colloids can be varied significantly by reducing the dimensions of the particles. The particles of a colloid can selectively absorb ions and acquire an electric charge; the existence of an electric charge on the surface of the colloidal particles is one of the factors determining kinetic stability of the colloids.

All the particles of a certain colloid are repelled by another with the same charge.

With specific regard to the present invention, the colloidal mixtures of greatest interest are those in which the dispersion medium is a solid and the disperse phase is a liquid, in particular water, in particular distilled or deionised water with conductivity below 30 microSiemens, i.e. aqueous gels.

Clay bases are commonly used in inorganic type gels, as a dispersion medium. Clays are natural silicates in a stratified form, with very fine granulometry, usually microscopic, and are usually structured in a lamellar form with irregular edges but with one smooth face.

Many clays have the property of "attracting" water molecules and binding them in a stable manner, thus producing colloids or, more precisely as already specified above, gels.

A typical clay in terms of the property of adsorbing water, swelling up and forming a gel is smectite known also as montmorillonite or more generally as bentonite, which can be found in sodic or calcic form.

For example the sodic form is known and used for its high capacity to absorb water which can be indicated as 18 layers of water molecules between two layers of clay.

Many commercial products on the market contain smectite or its derivatives or similar, but for the purposes of the present invention we shall indicate as "smectite" any lamellar silicate able to swell up and bind water, consequently forming a stable gel.

For the purposes of the application subject of the present invention, the presence of other cations or anions is not binding or significant.

Smectite is a family of non-metallic clays consisting of sodium, calcium and aluminium silicate hydrates. Smectite is a clay that can expand to twice its structure. Isomorphic substitutions result in various types of smectite and cause permanent modifications balanced by cations so that the water can move inside the crystalline structure giving it ionic exchange properties and high plasticity, thus resulting in the formation of gel.

One of the most widely used smectites for this kind of application is hectorite which is part of the group of trioctahedric smectites and consists mainly of a sodium, magnesium and lithium silicate.

An example of smectite that can be advantageously used as a gelling agent is the product known as "VEEGUM" manufactured and marketed by R.T. Vanderbilt Company Inc. Norwalk, CT 06856-5150 USA.

On the basis of an analysis of the structure, one single layer of smectite consists of a central layer of alumina or magnesia attached to two layers of silica. The thickness of the layer can vary from 1 to a few hundred nanometres (10⁻⁹ m).

Substitutions within the crystalline structure of smectite lead to the formation of surface charges on the layer. The discontinuities lead to a very slight positive charge on the edges, although the net charge of the layer is negative.

The negative charge on the surface of the layer is essentially balanced by sodium ions, even though other inorganic cations are present in lesser quantities. These cations balancing the charges are associated with the faces of the layers and are called "exchangeable" because they can be substituted by other cations. A macroscopic particle of clay is formed by thousands of these "sandwich" layers with exchangeable cations and a layer of water between each of them.

When water and clay are mixed, the water penetrates between the layers, forcing them, and the cations begin to spread, moving away from the faces of the layers.

Diffusion of the cations from the inside of the lamellar structure, combined with the osmosis of the water inside the layers, causes complete "de-lamination" of the layers until they are completely separated.

When the smectite is hydrated, i.e. the layers are separated, the weak positive charges on the edges of the layers are attracted by the negative charges on the faces thereof so that a three-dimensional colloidal structure forms, which is called "castle of cards".

This colloidal structure is able to "trap" and separate solids as suspensions, oils as emulsions and gases as foams or mousse.

Another base, advantageously used for the formation of colloids, is represented by variously substituted cellulose or polysaccharides. "Xanthan gum", for example, currently marketed by R.T. Vanderbilt Company Inc. Norwalk CT (USA) as Vanzan.

The skeleton of the xanthan gum is the cellulose and what makes it different from the traditional cellulosic thickeners (e.g. CMC; HEC, HPMC) are the lateral chains of trisaccharides with carboxylate groups that give the gum its negative charge.

Interaction of the lateral chains of trisaccharides gives the compound its particular properties.

In solutions with low ionic strength or high temperature, the chains of the gum take on a random spiral shape because the lateral anionic chains repel each other.

The addition of a small quantity of electrolyte reduces the repulsion between the lateral chains.

At higher concentrations of electrolyte (>0.15M) the rigid helical structure is maintained up to 100°C. Protection of the skeleton by the lateral chains explains the unusual resistance of the structure to both chemical and enzymatic deterioration.

In the presence of an electrolyte, a colloidal structure forms, which is based on the hydrogen bonds between the helical rods and which is limited by the net structure of the polymer. In practice, a colloid forms.

The bases represented by these types of compound are therefore able to provide suspensions with high thixotropic and pseudo-plastic properties.

The process according to the present invention is therefore particularly innovative and advantageous due to the fact that it acts as a vehicle for any powder paint in a suitable "support" causing it to "resemble" as far as possible to a liquid paint, acquiring the advantages thereof without its defects or problems.

In fact, liquid paints certainly have advantages with respect to powder paints, for example they can be applied in a more uniform manner and more finely than powder paints but they have the problem of the presence of solvent which must be eliminated. According to the present invention, the paint in gel form represents a product with the advantages of liquid paints (for example versatile use, variability of the thickness of the painted layer and uniform result) without its drawbacks (for example the presence of solvents/diluents with low environmental compatibility).

For the purposes of the present invention, any composition of what has been generically indicated as "paint" can be advantageously used. Said paint does not interact closely or directly with said "vehicle" or "support", but is mixed with it (the powder paint, for example, is mixed with the "vehicle" or "support" already formed previously) and is consequently incorporated in the "vehicle" or "support" with water base, so as to obtain a finished paint product in gel form, which is fluid and applicable with current or specially designed systems.

The paint product according to the invention and the process for its preparation thus provide an alternative product compared to the systems currently available, such as liquid paints with organic solvent/diluents and/or water base, powder paints or suspensions of powder in water, also called "slurry". The paint in gel form, which, as already said, consists of a mixture of a powder paint and a support or vehicle suitable for the formation of gel, has significant advantages with respect to the suspensions of powders in water. In fact the latter, even if well formulated, tend to sediment rapidly and give rise to undesired "aggregation" phenomena, and therefore have considerable limits in terms of production and utilisation. In the case of paint products in gel form according to the invention, on the other hand, the "active ingredients" of the paint are maintained unchanged over time inside the inert structure or "support". The gel, in its capacity as a "vehicle" or "support", can in fact incorporate particles of powder paint with dimensions varying within a wide range and can be obtained in different densities.

A further advantage of the paint products according to the present invention is represented by the fact that they can reach a dry content equal or superior to 80%. In particular, the diameter of the particles of said paint is comprised between 1 and 100 microns, preferably between 5 and 40 microns and the dry content of said paint product is between 10% and 90%, preferably between 40% and 80%.

Always according to the present invention, the "consistency" of the gel produced can vary according to the operating methods and conditions used in its formation so that its "fluidity" can influence the system via which the paint product can be used.

The fluidity of the end paint product will depend mainly on the following factors:
a) concentration of the dispersion medium or base in the end product
b) quantity of water used in preparation of the "vehicle" or "support" and, therefore, in the end product
c) mixing type and speed

The "rheology" of the end product depends largely on the preparation techniques, which can be modified according to the application technique used, for example by adding water and, if necessary, performing mixing at an appropriate speed.

The formation of a gel that is stable over time and which includes/incorporates the powder paint normally required for painting items, preferably metallic, is very important. According to the present invention, therefore, the elements to be taken into account are:
a) the powder paint
b) the base or dispersion medium
c) any adjuvants to the rheology of the "vehicle" or "support", in particular the gel

As already said, the composition of the powder paint is not crucial for the purposes of the present invention, likewise there are no particular requirements for the granulometry of the powder used and carried in the gel. The grain of the powder must nevertheless be adapted to the type of application chosen. For example, if in theory a powder between 1 - 100 microns can be carried in a gel, coarse grain powders will be preferably incorporated in stiff gels with low fluidity.

If a natural silicate such as clay has been chosen as a base, according to the present invention any clay can be chosen able to swell up when appropriately treated with water and therefore form a gel, more or less fluid according to the applied operating conditions. The exact type of clay used is not important, just as it makes no difference whether the base is a pure technical product or a commercial brand product.

Again according to the present invention, products such as the following, can be used in the formulation of the gel or as rheology adjuvants:
a) carboxymethyl celluloses (CMC) variously substituted
b) xanthan gums, also variously substituted
c) carbopolymers, also variously substituted

The above products are used, for example, in a percentage of 1-50% (preferably 10%) with reference to the quantity of clay (smectite).

In some special cases, xanthan gum is used as the sole component, with preparation methods very similar to those of the smectite described below.

Some basic rules for optimal preparation of the gel are listed below.
1) The best dispersions are prepared by mixing the base component, for example the clay, with water only, adding any other components at a later stage.
2) The more energy introduced, the faster the hydration.
3) The higher the level of hydration, the stronger the viscosity and the "yield" of the dispersion.
4) The level of hydration is directly proportional to the quantity of energy used to disperse the clay and, therefore, increases proportionally according to the following factors:
   - mixing intensity
   - heat introduced or temperature of the water
   - mixing time
5) The viscosity of the gel can be adjusted by the presence of additional organic components.
6) In some cases the addition of additives can provide good results since:
   - the combination can be economically more advantageous than the various components used individually;
   - the clay can give systems thickened with organic gums or polymers a greater yield;
   - the clay can compensate for the loss of viscosity common to many organic thickeners traditionally used, since it is not sensitive to heat;
   - the clay can reduce any stickiness or gumminess of the solutions of the organic thickeners.

According to the invention, the process for the preparation of said paint product, and in particular said mixing phase of said "vehicle" or "support" with at least one paint, occurs at a temperature of between 20°C and 80°C for a period of time comprised between 10 min and 120 min and at agitation speeds of between 100 r.p.m. and 6000 r.p.m.

Some practical non-limiting production examples of the present invention are given below.
Component A - any powder paint.
Component B - the "vehicle" or "support" to which the powder (component A) will be added.
Component C - (optional) Wetting agent of the family of the polyalcohol type non-ionic surface-active agents, for example a C₁₄-diol. Its presence is not essential, but can help introduce the powder into the preformed gel.

### EXAMPLE 1

### Preparation of component B 1 ("vehicle" or "support")

### Composition

| | |
|---|---|
| Smectite (if necessary as a formulated commercial product) | 5.0% (1) |
| Distilled or deionised water | 95.0% |
| Water temperature | 25°C |
| Agitation speed | 1000 r.p.m. (2) |
| Mixing time | 120 minutes |
| | (2) |

| | |
|---|---|
| Notes (1) - Some formulated products already contain variable percentages of CMC or xanthan gum. (2) - Unless indicated otherwise by the manufacturer if it is a formulated product. | |

*Procedure.* The correct quantity of water is placed in a suitable container provided with agitator and the smectite is added slowly, continuing the agitation, ensuring that it is dispersed in the solution without forming lumps, which would then be difficult to break down.

Leave to agitate for the time necessary and store in a closed container while awaiting use. The gel produced maintains very well during the storage time.

### EXAMPLE 2

### Preparation of component B2 ("vehicle" or "support")

### Composition

| | |
|---|---|
| Xanthan gum (also as formulated commercial product) | 0.5% |
| Distilled or deionised water | 99.5% |
| Water temperature | 25°C |
| Agitation speed | 100 r.p.m. (2) |
| Mixing time | 60 minutes |
| | (2) |

| | |
|---|---|
| Notes (2) - Unless indicated otherwise by the manufacturer if it is a formulated product. | |

*Procedure.* The correct quantity of water is placed in a suitable container provided with agitator and the xanthan gum is added slowly, continuing the agitation, ensuring that it is dispersed in the solution without forming lumps, which would then be difficult to break down.

Leave to agitate for the time necessary and store in a closed container while awaiting use. The gel produced maintains very well during the storage time.

### EXAMPLE 3

### Preparation of component B3 ("vehicle" or "support")

To prepare a gel from a mixture of smectite and CMC or xanthan gum (if not using an industrial formulation already on the market), proceed as follows:
a) roughly mix together the two products which are in powder form
b) proceed as for product B1, as in example 1

### EXAMPLE 4

### Preparation of component C (wetting agent)

### Composition

| | |
|---|---|
| Wetting agent | 5% |
| Distilled or deionised water | 95.0% |
| Water temperature | 25°C |

*Procedure.* The product is dissolved in water simply by mixing.

### EXAMPLE 5 (paint product)

### Composition

| | |
|---|---|
| Component B1 | 30% w/w |
| Component A (approximate granulometry 40 microns) | 70% w/w |

*Procedure.* The correct quantity of component B1 is placed in a suitable container provided with agitator and component A is added slowly, continuing the agitation, ensuring that the powder of the above component A is dispersed in the solution without forming lumps, which would then be difficult to break down.

Leave to agitate for the time necessary and store in closed containers while awaiting use. The paint product in gel form thus produced maintains very well during the storage time.

### EXAMPLE 6 (paint product)

### Composition

| | |
|---|---|
| Component B1 | 30% w/w |
| Component C | 10/w/w |
| Component A (RAL 8017 powder) | 60% w/w |

*Procedure.* The correct quantity of component B1 is placed in a suitable container provided with agitator and component C is added slowly, continuing the agitation. After adequate homogenisation, component A is added, ensuring that the powder of the latter is dispersed in the solution without forming lumps, which would then be difficult to break down.

Leave to agitate for the time necessary and store in closed containers while awaiting use. The gel produced mintains very well during the storage time.

### EXAMPLE 7 (paint product)

### Composition

| | |
|---|---|
| Component B2 | 30% w/w |
| Component A (approximate granulometry 10 microns) | 70% w/w |

*Procedure.* The correct quantity of component B2 is placed in a suitable container provided with agitator and component A is added slowly, continuing the agitation, ensuring that the powder of the latter is dispersed in the solution without forming lumps, which would then be difficult to break down.

Leave to agitate for the time necessary and store in closed containers while awaiting use. The gel produced maintains very well during the storage tme.

### EXAMPLE 8 (paint product)

### Composition

| | |
|---|---|
| Component B3 | 30% w/w |
| Component A (approximate granulometry 30 microns) | 70% w/w |

*Procedure.* The correct quantity of component B3 is placed in a suitable container provided with agitator and component A is added slowly, continuing the agitation, ensuring that the powder of the latter is dispersed in the solution without forming lumps, which would then be difficult to break down.

Leave to agitate for the time necessary and store in closed containers while awaiting use. The gel produced maintains very well during the storage time.

## Claims

1. Process for the preparation of a paint product in the form of a colloid which comprises the following steps:
- preparation of a "vehicle" or "support" by mixing at least one dispersion medium or base and at least one disperse phase;
- mixing of said "vehicle" or "support" with at least one paint.

2. Process as claimed in claim 1, **characterised in that** said dispersion medium or base is selected among natural silicates such as clays, or from celluloses or polysaccharides variously substituted if necessary, while said disperse phase is water, in particular distilled or deionised water with conductivity below 30 microSiemens.

3. Process as claimed in claims 1 and 2, **characterised in that** said "vehicle" or "support" is in the form of gel.

4. Process as claimed in claim 1, **characterised in that** said paint suitable for being mixed with said "vehicle" or "support" is in solid form, in particular in powder.

5. Process as claimed in claim 2, **characterised in that** said clay is smectite or montmorillonite or bentonite, such as Veegum® and said cellulose or polysaccharide is xanthan gum, such as Vanzan®.

6. Process as claimed in claim 1, **characterised in that** it also comprises one step of addition of carboxymethyl celluloses and/or carbopolymers, substituted if necessary and/or a wetting agent such as polyalcohol.

7. Process as claimed in claim 6, **characterised in that** said carboxymethyl celluloses and/or carbopolymers are added in quantities of between 1 and 50%, preferably 10% in weight with respect to the weight of said dispersion medium or base.

8. Process as claimed in the preceding claims, **characterised in that** the diameter of the particles of said paint is between 1 and 100 microns, preferably between 5 and 40 microns and the dry content of said paint product is between 10% and 90%, preferably between 40% and 80%.

9. Process as claimed in the preceding claims, **characterised in that** said mixing phase of said "vehicle" or "support" with at least one paint occurs at a temperature of between 20°C and 80°C during a period of time comprised between 10 min and 120 min and at an agitation speed comprised between 100 r.p.m. and 6000 r.p.m.

10. Paint product obtainable according to the process described in claims 1 to 9.

11. Paint product in the form of a colloid, in particular in the form of gel which comprises a "vehicle" or "support" and a paint mixed together.

12. Paint product as claimed in claim 11, **characterised in that** said "vehicle" or "support" is selected from natural silicates such as clay, or from celluloses or polysaccharides variously substituted if necessary in a mixture with water.

13. Paint product as claimed in claim 11, **characterised in that** said paint is in powder form.

14. Paint product as claimed in claims 11 to 13, **characterised in that** it is in gel form.

15. Paint product as claimed in claims 11 to 14, **characterised in that** it comprises carboxymethyl celluloses and/or carbopolymers, substituted if necessary and/or a wetting agent such as polyalcohol.

16. Use of a paint product as claimed in claims 11 to 15 for the treatment and/or finish of surfaces made of metal, glass, ceramic, plastic or other materials resistant to the baking temperature of the paint product.

17. Metal, glass, ceramic, plastic surfaces painted with said paint product according to the preceding claims.
